# EUROPEAN PATENT SPECIFICATION

(11) **EP 1 070 894 B1**
(45) Date of publication and mention of the grant of the patent: **08.12.2004**
(21) Application number: 00114989.7
(22) Date of filing: 20.07.2000
(51) Int. Cl.: H02G 3/30, F16L 3/14, H02G 3/04, F16L 3/26

(54) **Cable support and distribution system and method**
Kabelträger und Verteilungssystem und Verfahren
Support de câble et système et méthode de distribution

(30) Priority: 23.07.1999 US 145322
(43) Date of publication of application: 24.01.2001
(73) Proprietor: Erico International Corporation, Solon, Ohio 44139 (US)
(72) Inventor: Laughlin, Raymond S., Garfield Heights, Ohio 44125 (US); Di Francisco, John A., Twinsburg, Ohio 44087 (US); Lynch, Edward J., Jr., Akron, Ohio 44303 (US)
(74) Representative: Gille Hrabal Struck Neidlein Prop Roos

(56) References cited:
- EP-A- 0 891 028
- FR-A- 2 017 070
- GB-A- 1 066 155
- US-A- 5 215 280
- US-A- 5 740 994

## Description

UTP category 5 cable is a data or communications cable constructed of four unshielded twisted pairs of 24 AWG thermoplastic insulated conductors enclosed is a thermoplastic jacket. The pairs of copper wires are tightly twisted to achieve high speed transmission; the tighter the twist, the faster the possible transmission speed. While UTP is available in Category 3, 4, 5, or 6, the higher the number, the tighter the twist. The tighter the twist also helps reject electromagnetic interference. While many designers have selected category 3 for voice, and category 5 for data, the trend is to install category 5 or higher for all applications in commercial buildings. Other high performance cables are being developed.

As the computer and communications industries have grown, the organization and management of the cabling has become a serious problem. It has literally been dumped on the floor or dropped through walls, kinked around corners, or simply dropped on or dragged over the top of suspended ceilings. Cables such as UTP (uniform twisted pair) cables and fiber optic cables simply cannot be treated in such a cavalier fashion and have the equipment they serve meet expectations.

For example, cross-talk on a telephone may be due to improper cabling or cable placement. Attenuation, cross-talk, data distortion, and return loss all affect signal strength which can degrade any system transmission capability. Attenuation is the loss of power or signal strength along the transmission medium. Cross-talk is an unwanted transmission from another nearby cable, or even a pair in the same cable. Return loss is a measure of degree of impedance between the cable and a connector. Background noise is also an irritating problem resulting from a low signal-to-noise ratio. Inadequate cable installation is a key reason for such factors, especially when data and voice transmission speeds are continually being increased, for example from 16 Mhz to 100 Mhz or more.

Such cable should not be kinked, snaked, bent sharply, tugged, sag excessively, or come into engagement with sharp edges, or be too close to power cables.

The wiring can be placed under the floor with elevated flooring which is extremely expensive and often not practical. A more common place for such wiring is above the ceiling between the structural floor or roof above, and a dropped or acoustical ceiling.

The area above many acoustical or drop ceilings is usually cluttered with structural members such as beams or open joists, utilities such as plumbing or sprinkler systems, HVAC ducts, conventional power wiring, often encased in conduit or armored, and the suspension hangers for the ceiling and any lighting or other fixtures in the ceiling.

Moreover, most beams, joists and other structures extend in a rectilinear fashion above a ceiling, while communications or data cable usually radiates from a panel or closet in a star topology.

Conventional power wiring clips, snaps, wire hooks, bridle rings, or plastic ties are not suitable for such cable because of a variety of factors. They may present sharp edges or produce sharp turns or kinks in the cabling, or they may crush or pinch a bundle.

One specialized support for such telecommunications cable is shown in US-A-5,740,994 which can be attached to a variety of building structures above a suspended ceiling or even supported to extend upwardly from a ceiling grid. Another cable support for UTP category 5 cable is known from EP-A-0891028 having loop hangers.

If the building is being built new and is being designed with such cable in mind, cable trays are often employed. These are simply suspended or cantilevered trays in which such cable can be laid flat to extend horizontally, and are hung or suspended from beams, joists, or decking for example, oftentimes by trapeze hangers. Such trays are expensive and can be retrofitted into existing building, but not easily or economically, particularly if there is not a significant amount or extent of open or unobstructed horizontal space.

More conventional cable tray clamps and hardware for both power and communication cables are sold under the CADDY trademark. These trays require a substantial amount of hardware and are best installed as the building is being constructed and before any acoustical or suspended ceiling is installed. Also such cable tray systems are more easily installed parallel to a structural member such as a beam, or transversely as with the aid of a trapeze. Flexibility and retrofitability are not particularly characteristic of these conventional cable tray systems.

Somewhat more flexibility is achieved with wire grid trays or systems. These still are costly and require a number of parts, and cannot be retrofitted above an existing ceiling without substantially dismantling the ceiling. They are more costly, more costly to install, and more costly to retrofit above an existing drop ceiling.

Traditional cable trays are usually made up of rigid aluminum or steel tray sections, which come in varying lengths that are connected together and attached to the building structure, while the newer "flexible" cable trays are predominately made up of wire-form cross sections that, again, come in varying lengths. Both types share a similar disadvantage, in that the lengths provided are difficult to manage, and practically impossible to install over an existing drop ceiling without removing entire sections of the T-grid and cross brace system. In addition, splices may require the installer to use several different tools to complete the splice, making them complicated and time-consuming to install.

One flexible wire form system indicates it can create any angle or avoid any obstacle with a pair of bolt cutters. This is hardly the type of tool which can be used easily, if at all, above a suspended ceiling without dismantling the whole ceiling.

Also, such wire form systems may be supported in the center of the wire form tray. Thus for symmetrical loading there may be two bundles or sets of cables, one on each side of the center support. One has to be loaded from one side while the other from the other side. This makes changes, additions, or transitions to the system more difficult.

A furthermore known support channel for marine-grade shore power cords, accessory cables, hoses and such (US-A-5215280) comprises C-shape semi-rigid channels for housing and supporting several power cables, which channels are supported on trough-like hangers. Such channels are suitable to support cables only in straight sections.

The object of the invention is to provide a flexible support and distribution system with few parts which can be installed above an existing celling without substantially dismantling the ceiling, and which provides easy access to the entire width of support and distribution system from one side.

This object is solved with a cable, support and distribution system comprising the features of claim 1.

Preferred embodiments and improvements of this system are subject matter of the dependent claims 2 to 12.

This object is furthermore solved by a method comprising the features of claim 14.

Preferred embodiments and improvements of this method are subject matter of the dependent claims 15 to 20.

The invention provides a low cost support and distribution system for interior runs of telecommunications and like cable which is of simplified construction, and which can easily be installed, and more particularly retrofitted, above existing acoustical or grid ceilings, with the removal of only a few grid tiles, and a method of supporting and organizing such cables.

The cable support system of the present invention provides the organization and support for bundles or runs of communication or datacom cables, for example, which avoids the common problems and mess usually associated with the distribution of data and communication cabling. The system is designed to be a low cost and easier to install cable tray, supporting runs or bundles of cable from a building structure such as a structural ceiling, beam, girder or purlin, and above a suspended acoustical ceiling. The system is suspended by common threaded rod from a wide variety of fasteners hanging the rod from the various structures. The rod supports a primary hanger which includes an upwardly opening generally rounded trough-shape support symmetrically below the rod with one side of the support extending integrally to the rod connection. The other side of the primary hanger is open so that a secondary hanger may be inserted and fastened to the inside of the upwardly opening support. This makes the entire cross section of the tray accessible from one side. The secondary hanger is preferably formed from rolls of flexible open plastic mesh having oriented strands. The length of the secondary hanger forms an upwardly opening trough supported by spaced primary hangers. The mesh is secured to the inside of the primary hangers by spring clips, and plastic splice clips may be used to join rolls of such mesh, or may be used in the fabrication of various transitions or branches. When the cable is in the trough formed by the secondary hanger, the open side of the hanger is closed by a connecting strap which also symmetrically transfers the load to both sides of the upwardly opening support or primary hanger.

In addition to the five components noted, a sixth component in the form of a wire rod form transition fabrication may be employed to form curves, corners, Tees, or even changes in elevation.

The transition comprises a center form support like the primary hanger but of wire rod form with a horizontal eye vertical axis hole formed at the top and a vertical eye horizontal axis hole at the opposite end.

The eye at the top accommodates a threaded rod and the vertical eye accommodates the strap as with the primary hanger. A bottom center bendable strut or bar extends on each side of the center support, and upwardly extending trough-shape supports are mounted on the bendable strut on each side of the center support. The trough-shape supports at each end are paired and an end of the secondary hanger may be secured to said paired supports by the plastic splice clips described above.

Intermediate trough -shape supports may be used to anchor the end of a secondary fastener in the formation of a Tee intersection. The secondary mesh hanger may terminate at each end or may extend through the transition with a flap simply cut out at the Tee intersection.

The system is inexpensive and may be installed above suspended ceilings without removing the grid or frame work.

In the drawings, preferred embodiments are shown, wherein
Figure 1 is a perspective view of the primary support hanger bracket of the system;
Figure 2 is an axial elevation of the hanger;
Figure 3 is a side elevation of the hanger as seen from the right hand side of Figure 2;
Figure 4 is a perspective view of the enclosing retaining strap for the primary support hanger;
Figure 5 is a perspective view of the spring clip used to secure the secondary cable containment to the primary hanger; inside the semi-circular support and the cable runs or bundles are positioned within the secondary hanger, the open space 48 may be closed by the retaining strap seen generally at 50 in Figure 4.

The retaining strap 50 includes a vertical lower end 51 which terminates in a relatively narrow dogleg or tab 52 inwardly offset by shoulder 53. The main body portion of the strap shown at 54 extends upwardly at an angle of about 45° which is the same angle of inclination of the section 34 of the primary hanger. The top of the strap terminates in a horizontal portion 55 which includes on one side a bayonet notch 56 with the outermost edge of the notch being slightly inclined or forming a cam surface 57. As will hereinafter be described the strap is simply attached to the primary hanger by inserting the tab or dogleg 52 into the hole 37 and then rotating the top upwardly to snap onto the threaded rod above the upper end of the primary hanger to be secured in place by conventional nut fasteners. The strap then provides symmetrical hanging support for both sides of the upwardly opening support 30 as well as enclosing the trough or cable tray formed.

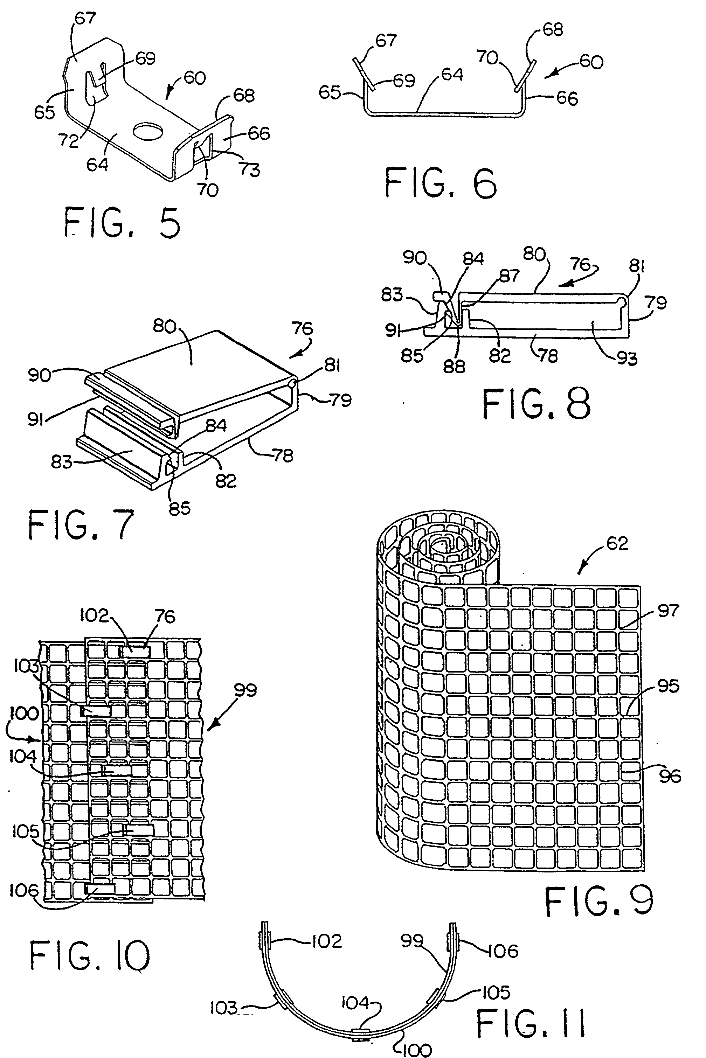

Referring now to Figures 5 and 6 there is illustrated a spring snap clip shown generally at 60 which is employed in connection with the flange edge notches to secure the secondary hanger or open flexible mesh seen at 62 in Figure 9 to the interior of the primary hanger 25. The spring snap clips each include a generally flat surface 64 with legs 65 and 66 bent in the same direction. The tips of the legs are bent outwardly or away from each other as shown at 67 and 68, respectively. Extending generally coplanar to the outwardly flared tips of the legs of the clip are inwardly struck tangs seen at 69 and 70. These tangs may be struck from the outer edges of holes 72 and 73. The profile configuration of the edges and tangs is seen more clearly in Figure 6. The spring clips are such that they may simply be pushed on the notch edges such as seen at 44 and 45 so that such edges cam the legs apart with the tangs 69 and 70 snapping over the notch edges. Once in place the notches keep the snaps from moving or sliding circumferentially of the primary hanger. The clip seen in Figures 5 and 6 is made of spring steel.

Figures 7 and 8 illustrate a splice clip shown generally at 76. The splice clip as hereinafter described is designed to secure the end of one roll of such mesh or fabric 62 to the beginning next roll, or to fabricate curves, elbows, Tees, branches or even changes in elevation with the transition hereinafter described.

The splice clip seen in Figure 7 and 8 is made of a plastic material such as polypropylene and includes a flat based 78 which has a relatively short rear wall 79. The rear wall is connected to top wall or outer corner 80 by a hinge 81. At the front of the base 78 there is provided a relatively shorter ridge wall 82 and forwardly spaced therefrom a wall 83 which has a sloping interior outer edge 84 which terminates in a catch shoulder 85. The outer cover 80 terminates in an inwardly projecting relatively thin wall 87 which is hinged at 88 to outwardly extending flex edge 90 which includes a forwardly projecting catch 91 adapted to snap under the when the splice clip is closed as seen in Figure 8. The splice clip can be opened or released simply by elevating the forward edge 90 pivoting clockwise pivot or hinge 88 as seen in Figure 8 to disengage the two latches. The clip can be closed simply by pressing the cover 80 down which encloses the interior space 93. The clip will readily accommodate within the opening 93 a number of strands of the open mesh secondary hanger fabric or even accommodate wire forms. The interior opening top-to-bottom of the clip 76 is approximately a quarter of an inch (6.35mm), while the interior length of the opening 93 is approximately 1.4 inches (31.2mm).

Although other types of fabric may be employed, the preferred open mesh fabric is seen at 62 in roll form in Figure 9. It will be seen that the fabric 62 is formed of longitudinal strands 95 and transverse strands 96. These strands are preferably oriented high density polyethylene extruded with approximately 10% fiber reinforcing added. The strands are welded to each other to form nodes shown generally at 97. The thickness of the strands may be typically 0.14 (3.6mm) inches while the rectangular or square openings are approximately 1 square inch (2.54cm²). This provides a mesh that is approximately 60% to 90% voids. Although other forms of mesh fabric may be employed, the square open mesh illustrated is preferred for a variety of reasons. One reason is the reduced material involved which in the case of fire minimizes the creation of fumes. Also, a substantially open nature of the mesh does not act as an impediment to any sprinkler system which might be above a suspended ceiling. The open mesh also permits visibility of the cables or bundles within the open trough being formed. Cables are sometimes color coded and the open mesh may facilitate the location of a cable without completely dismantling the system or a bundle within the trough formed. In addition, the open mesh with the relatively large voids facilitates the branching of cables from the trunk or run within the trough. The cables may simply be branched through the openings in the mesh and if the opening is not sufficiently large for the number of cables involved, the opening can readily be enlarged with scissors or snips. The preferred mesh comes in rolls which are approximately 15 inches wide (38.1cm) and 25 feet in length (76.2 decimeters).

The material of such rolls can be joined end-to-end using the splice clips of Figures 7 and 8 as seen in Figure 10. In Figure 10, the end of one roll is seen at 99 on one side, while the end of another roll is seen at 100 on the opposite side. The fabric is slightly offset for visibility. Splice clips 76 seen at 102, 103, 104, 105, and 106 are employed to join the fabric ends. It is noted that each splice clip is locked about four parallel strands, two from each of the overlapping mesh or fabric ends.

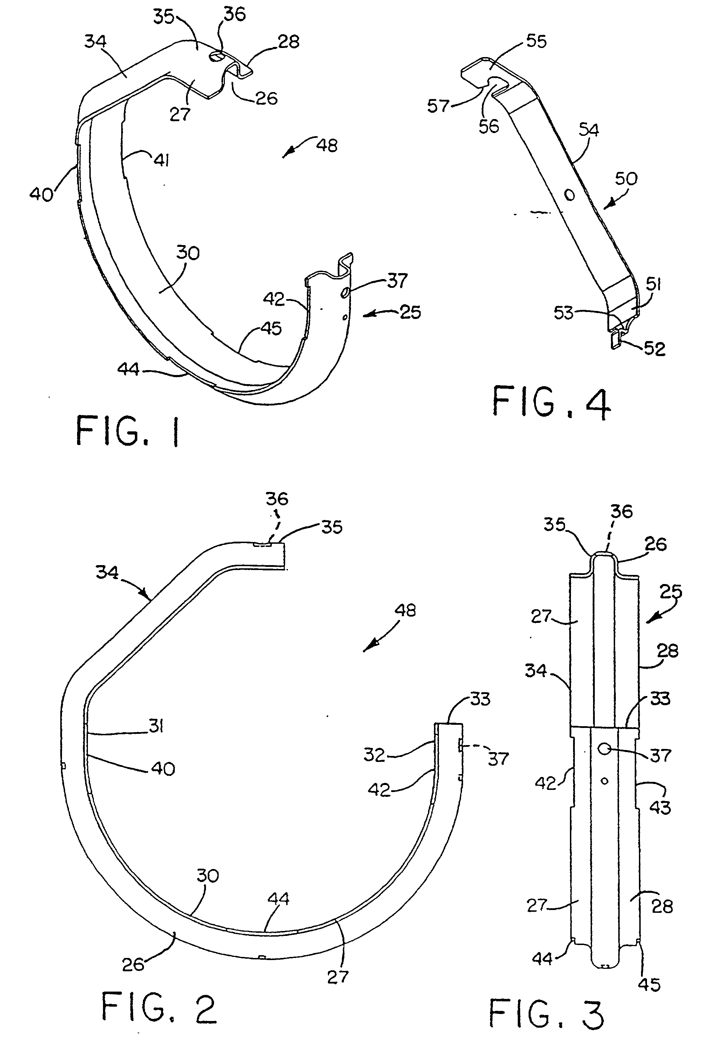

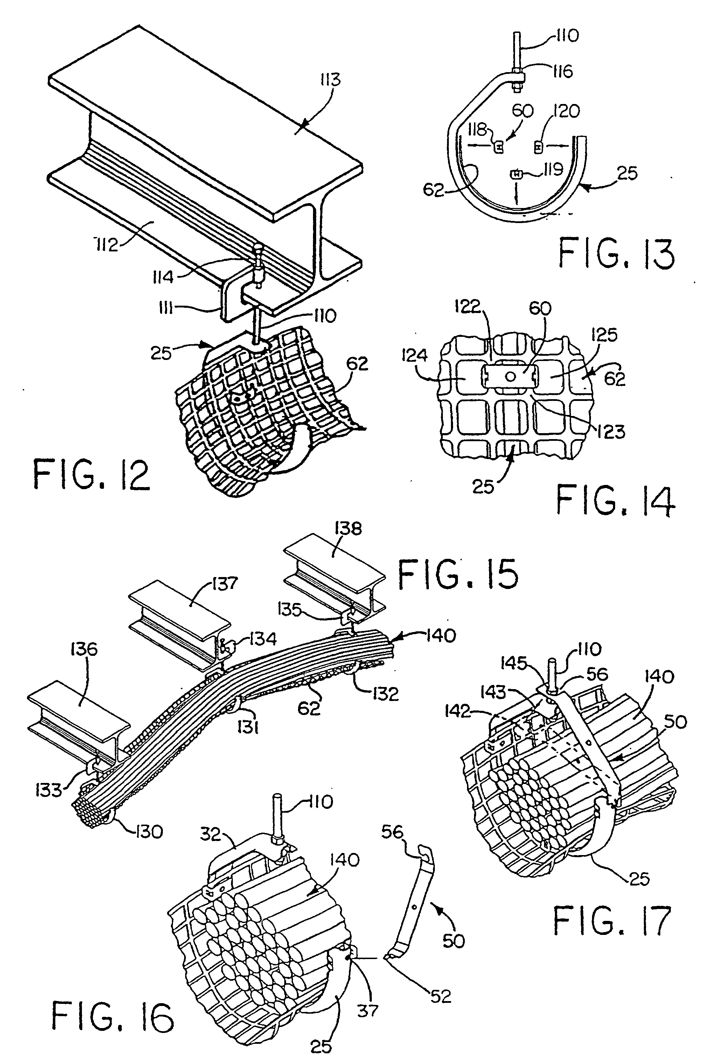

Figure 11 illustrates the two rolls joined and the positioning of the splice clips as the two fabric sections are longitudinally formed into the upwardly opening trough or saddle section conforming to the interior of the primary hanger. Figure 1 illustrates the trough configuration of the secondary hanger when conforming to and supported by the interior of the primary hanger.

Referring now to Figures 12, 13, and 14 it will be seen that the primary hanger shown generally at 25 is suspended by threaded rod 110 from a rod hanger clamp 111 fastened to the lower flange 112 of I -beam 113. The fastener 111 is held in place on the projecting flange 112 by screw clamp 114.

As seen in Figure 13, the lower end of the rod 110 is secured to the upper end of the primary hanger 25 by nuts shown generally at 116 both above and below the hole 35. Washers may also be employed. With reference to such figures it will be seen that the mesh fabric 62 has been bent to conform to the interior of the primary hanger and forms the elongated upwardly opening trough shown. The mesh fabric is secured to the interior of the primary hanger by three spring clips 60 seen in Figure 13 at 118, 119, and 120. The spring clips are simply moved in the direction of the generally radially extending arrows shown to embrace preferably at least two parallel strands of the mesh fabric and snap over the notch edges shown more clearly in Figures 1, 2, and 3.

Figure 14 illustrates the snap clip 60 embracing transverse strands 122 and 123 of the mesh 62 with the legs of the snap clip projecting through the voids or openings 124 and 125 in the flexible fabric securing the fabric to the interior of the primary hanger 25. As illustrated, three clips are employed two securing the edges of the fabric to the upper portions of the hanger while the third secures the center of the fabric to the bottom of the hanger. The tensile strands of the fabric as well as the trough - shape provide flexibility, yet supporting strength for the portion of the secondary hanger which extends between the primary hangers.

Referring now to Figure 15, there is illustrated three primary hangers shown generally at 130, 131, and 132 supported from threaded rods from beam flange clamps 133, 134, and 135, respectively, secured to the flanges of beams 136, 137, and 138, respectively. It is noted that the alignment of the primary hangers is not perfect and there is substantial offset or curvature in the alignment. This indicates the type of flexibility or deviation which can be achieved by the support system of the present invention. Figure 15 illustrates a cable bundle shown generally at 140 positioned within the secondary or open mesh hanger 62 in turn supported by the spaced primary hangers at 130, 131, and 132.

After the bundle 140 is within the trough or secondary hanger 62 supported in turn by the primary hangers, he trough may be closed by assembling the retaining strap 50 as seen in Figures 16 and 17. In Figure 16 the tab or dogleg 52 is inserted in the hole 37. The strap may then pivot from the phantom line position seen at 142 in Figure 17 in the direction of the arrow 143 to snap the bayonet notch 56 on the rod 110. When the notch 56 is in place on the threaded rod it is simply tightened down or clamped with suitable hardware 145 such as the nut illustrated in the final position seen in full lines in Figure 17. The primary hanger is then supported symmetrically from the center threaded rod 110 and also the trough formed by the secondary hanger supported in turn by the primary hanger has been enclosed.

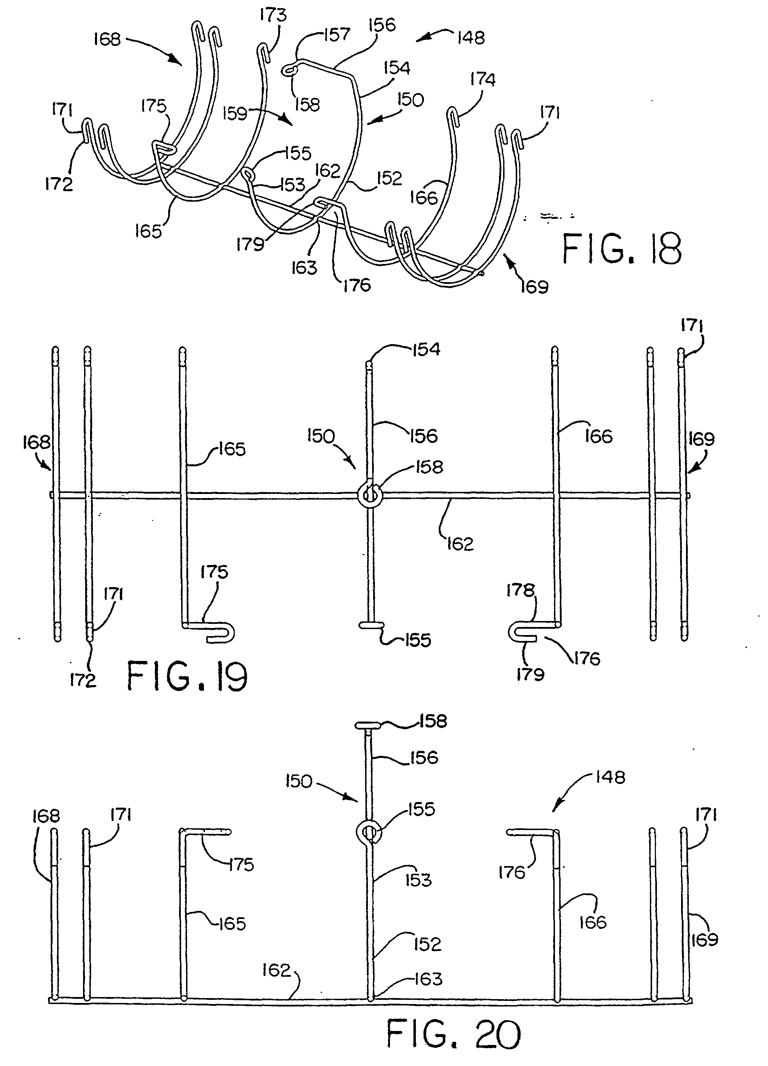

It can be seen that the components of the system so far described are the primary hanger and it's strap, the secondary hanger in the form of the open mesh or fabric, the metal clip for securing the secondary hanger to the primary hanger, and the plastic splice clip for connecting sections of the secondary hanger to each other. The splice clip is also employed to secure sections of the secondary hanger to a rod form transition seen generally at 148 in Figures 18-22.

With initial reference to Figures 18-20 it will be seen that the transition is a wire rod form fabrication which includes a center form shown generally at 150 which has generally the same profile configuration as the primary hanger 25.

The center form includes a generally semi-circular upwardly opening trough-like support 152 with relatively short vertical extensions 153 and 154 at each side thereof. The extension 153 terminates in a eye 155, the hole of which has a horizontal axis. The other side of the center form continues upwardly to the inclined portion 156 which terminates in relatively short horizontal leg 157 terminating in eye 158 with the hole having a vertical axis. The axis of the hole of the eye 158 is centered over the upwardly opening trough-like support 152.

In this manner the center support has the same profile configuration as the primary hanger seen in Figures 1-3 and has a vertical axis hole at the top center and a horizontal axis hole at the opposite end. The holes formed by the eyes 155 and 158 then generally correspond to the holes 37 and 36, respectively seen in Figures 1-3. This enables the strap 50 seen in Figure 4 to be employed in the same manner to close the open side 159 of the center form 150.

Extending transversely of the center form or longitudinally of the entire transition is a bottom center strut or bar 162 which is welded to the underside of the center form at 163. Also secured to the center bar or strut 162 are symmetrically positioned left form 165 and right form 166. Also secured to the ends of the center bar or strut 162 are paired end forms seen at 168 and 169, respectively. The intermediate left and right forms 165 and 166 as well as the 56 is snapped on the rod 200 and the assembly is held in place by the nuts illustrated.

It will be appreciated that the degree of bending may vary from slight to the almost elbow illustrated and that the bottom center rod or strut 162 may also be bent so that changes in elevation may be accomplished.

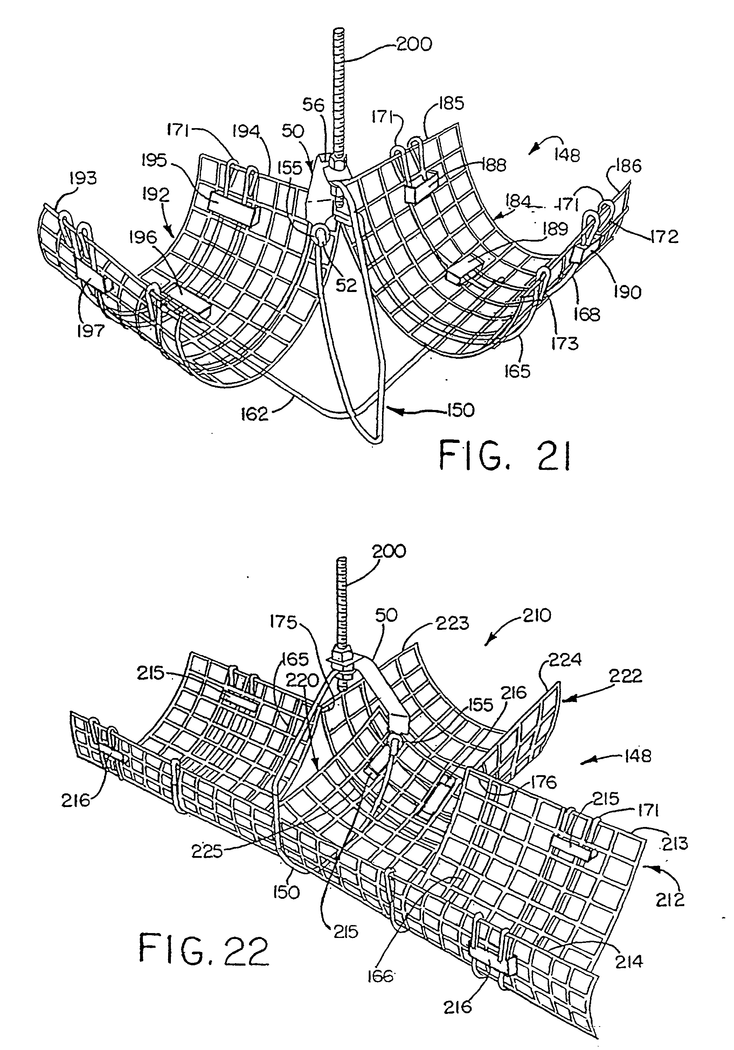

Referring now to Figure 22 there is illustrated a transition 148 forming a Tee shown generally at 210. In the Tee formation seen in Figure 22 the bottom center rod or strut 162 has not been bent. Within the transition a secondary hanger shown generally at 212 is secured by bending the hooks 171 about the edge strands 213 and 214. The secondary hanger 212 is also secured in place by the splice clips shown at 215 and 216 at each end securing the secondary hanger to the paired end forms. If employed, the third splice clip at the bottom of the trough at each end is obscured. The secondary hanger has been cut to form a flap shown generally at 220. The flap has been threaded over the eye 155 of the center form and is attached to further secondary hanger 222 by the splice clips shown at 215 and 216.

The further secondary hanger is shown generally at 222 and extends normal to the secondary hanger 212. The edge strands 223 and 224 of the secondary hanger 222 at the corner with end strand 225 are engaged within the inwardly directed hooks 175 and 176 on the intermediate forms 165 and 166. It will be appreciated that the secondary hanger 222 will extend onto a primary hanger forming a run which extends normal to the run formed by the secondary hanger 212. In Figure 22 the center form includes the strap 50 extending from the eye 155 to the rod 200 and held in place by the nut fasteners shown. Accordingly, a wide variety of constructions may be formed with the transition.

While the invention has been shown supported from steel I-beams, it will be appreciated that there are a wide variety of other structures from which the cable support and distribution system of the present invention may be suspended. These include girders, angle bars, a wide variety of purlins, or a metal or concrete deck. It will be appreciated that there are a wide variety of hangers which will suspend threaded rod from such structural members and that with the present invention a low cost easily fabricated support and distribution system for communications cable can readily be retrofitted above a suspended ceiling for the proper organization, care and distribution of such sensitive cable.

## Claims

1. Cable support and distribution system, having a series of primary holders (25; 150) each having a supporting generally trough-shape bottom (30, 152) and a resilient secondary holder (62; 148; 222) supported within said primary holders to form a longitudinal trough for supporting a bundle of cables (140) therein, **characterized in that** each primary holder is a hanger (25; 150) adapted to be suspended from building structural components above a suspended ceiling, wherein each hanger (25; 150) has a trough-shape bottom support (30; 152) for the bundlesof cables (140) and at least one leg (31) extending from the bottom support to a central elevated suspension support (35, 36) so that the load of the bundle is supported symmetrically above the center of the bottom support, and that the secondary holder (62; 148; 222) comprises flexible sheet material adapted to conform to the trough-shape bottom of the hangers (25; 150) and extending from hanger to hanger to form a flexible cable tray.

2. System as set forth in claim 1, wherein the flexible sheet material of the secondary holder (62; 148; 222) is an open mesh.

3. System as set forth in claim 1 or 2, wherein the flexible sheet materialof the secondary holder (62; 148; 222) is secured to the interior of each hanger (25; 150) at least at each edge (99; 100) of such sheet material.

4. System as set forth in claim 3, wherein the flexible sheet material of the secondary holder (62; 148; 222) is secured by clip means (60; 76; 101 to 106; 188 to 190; 195 to 197; 215, 216) interior of each hanger (25; 150) at least at three equally spaced locations.

5. System as set forth in one of claims 1 to 4, wherein the flexible sheet materialof the secondary holder (62; 148; 222) is formed from rolls of such sheet material joined end-to-end.

6. System as set forth in one of claims 1 to 5, wherein each hanger (25; 150) has at one side a fixed arm (31, 34, 35) continuing from the trough-shape bottom (30; 152) to a rod connection (36; 56) over the center of the hanger, and at the other side an opening (48; 159) for insertion of the flexible sheet material of the secondary holder (62; 148; 222).

7. System as set forth in claim 6, wherein removable strap means (50) are provided operative to extend from the other side of each hanger (25; 150) to the center rod connection (36; 56) to close the open side (48; 159) and support both sides of the hanger symmetrically from the center rod connection.

8. System as set forth in claim 6 or 7, wherein the strap means (50) of the openable leg (32) of each hanger (25; 150) is removably secured at its upper end at a position in general vertical alignment with the central elevated suspension support (36; 56) of the hanger (25; 150).

9. System as set forth in one of claims 1 to 8, wherein the trough-shape flexible sheet secondary holder (62; 148; 222) extends through and is supported by a plurality of primary holders (150) and comprises, a transition support (148) having a center support (150), and a bottom center bendable strut (162) extending on each side of said center support, upwardly extending generally trough-shape supports (165, 166, 168, 169) on each side of said center support and secured to said bendable strut, and means to secure an end of said flexible sheet secondary holder (62) to said transition support so that said cable tray will be directed through transitions dictated by the bending of said strut (162).

10. System as set forth in claim 9, wherein said transition support (148) comprises a rod form fabrication (162), and clip means (101 to 106; 188 to 190; 195 to 197; 215, 216) operative to secure said secondaryholder (62) to said transition support (148) by embracing the rod form fabrication.

11. System as set forth in claim 9 or 10, wherein said trough-shape supports (152) at each end of said strut (162) are paired, with each of said pair (168, 169) within said clip means (60).

12. System as set forth in one of claims 9 to 11, wherein a right and left trough-shape support (152) Is symmetrically positioned on each side of said center support (150), and means (215, 216) to secure an edge (99; 100) of a secondary holder (62) to said right and left trough-shape supports are provided to form the stem of a Tee.

13. Method of supporting and organizing a bundle of cables (140), comprising the step of supporting at least two primary holders (25) hanging from building structures, each primary holder including an upwardly opening trough-shape bottom support (30), **characterized in** the steps of stringing between said primary holders a flexible secondary hanger (62) which is flexed to conform to the upwardly opening trough-shape supports to form an upwardly opening cable tray trough between said primary holders, and then laying cables into said upwardly opening trough to support a bundle of cables (140) in organized fashion extending between said primary holders (25).

14. Method as set forth in claim 13, wherein flexible secondary hangers (62) are secured to each trough-shape support (30).

15. Method as set forth In claim 13 or 14, wherein the primary hangers (25) each are provided with a centered rod connection (36) above the trough-shape support (30), said rod connection being integrally connected to the support on one side thereof leaving the other side open to receive the secondary hanger (62) and one or more cables (140).

16. Method as set forth in claim 15, wherein the other open side (48) of each primary hanger (25) is closed with a strap (50) loading both ends of the trough-shape support (30).

17. Method as set forth in one of claims 13 to 16, wherein the secondary hangers (62) are formed from rolls of plastic mesh, and wherein the rolls are connected end-to-end.

18. Methods as set forth In one of claims 13 to 17, wherein a wire form transition (162) is used with said secondary hangers (62) to form curves, elbows, Tees and other configurations.

19. Method as set forth in one of claims 13 to 18, wherein the transition is provided with a bendable horizontal bottom strut (162) to obtain a desired curvature or change in elevation of the cable support system.

20. Method as set forth in one of claims 13 to 19, wherein the transition is provided with a center form to suspend the transition from a threaded rod (110; 200).

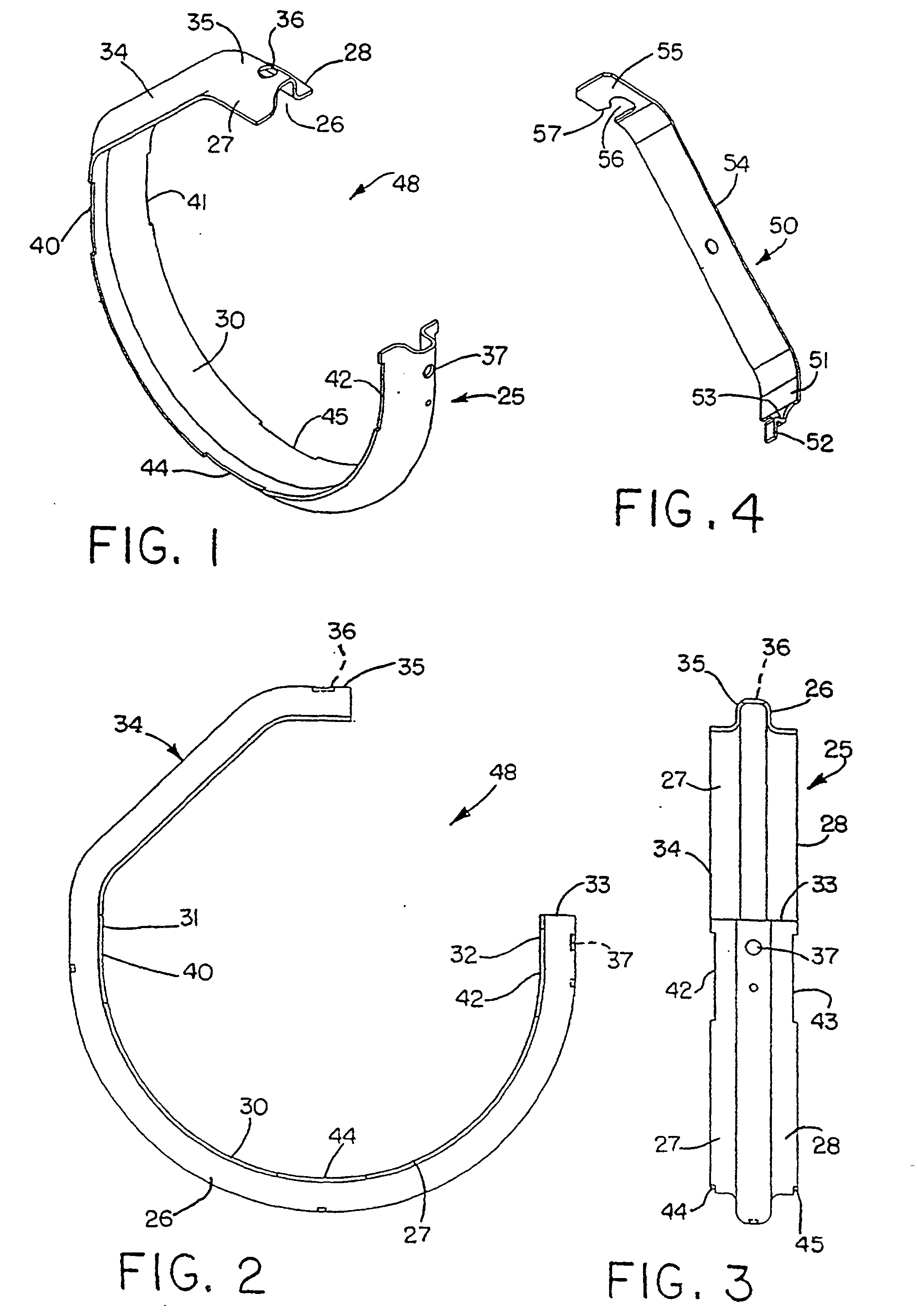

## Patentansprüche

1. Kabel-Halte- und Verteilungssystem, welches eine Reihe von ersten Haltern (25; 150), der jeder einen tragenden, im Wesentlichen trog-förmigen Boden (30, 152) aufweist und einen elastischen zweiten Halter (62; 148; 222), der innerhalb der genannten ersten Halter gehalten wird, um einen Längstrog zur darin vorgesehenen Halterung eines Kabelbündels (140) auszubilden, umfasst, welches dadurch charakterisiert ist, dass jeder erster Halter ein Aufhänger (25; 150) ist, der so ausgestaltet ist, an Gebäudekonstruktionskomponenten oberhalb einer abgehangenen Decke aufgehängt zu werden, wobei jeder Aufhänger (25; 150) eine trogförmige Bodenhalterung (30; 152) für die Kabelbündel (140) und wenigstens einen Ausleger (31) aufweist, der sich von der Bodenhalterung zu einem zentralen, erhöhten Aufhängungshalter (35, 36) erstreckt, so dass die Last des Bündels symmetrisch über dem Zentrum der Bodenhalterung gehalten wird, und dass der zweite Halter (62; 148; 222) ein flexibles Folienmaterial umfasst, welches geeignet ist, sich an den trogförmigen Boden des Aufhängers (25; 150) anzupassen und sich von Aufhänger zu Aufhänger erstreckt, um eine flexible Kabelwanne auszubilden.

2. System gemäß Anspruch 1, wobei das flexible Folienmaterial des zweiten Halters (62; 148; 222) ein offenes Netz ist.

3. System gemäß Anspruch 1 oder 2, wobei das flexible Folienmaterial des zweiten Halters (62; 148; 222) am Innern jedes Aufhängers (25; 150) wenigstens an jeder Kante (99; 100) von diesem Folienmaterial befestigt ist.

4. System gemäß Anspruch 3, wobei das flexible Folienmaterial der zweiten Halter (62; 148; 222) mit Klippmitteln (60; 76; 101 bis 106; 188 bis 190; 195 bis 197; 215, 216) am Innern jedes Aufhängers (25; 150) wenigstens an drei, gleichmäßig beabstandeten Stellen befestigt ist.

5. System gemäß einem Anspruch 1 bis 4, wobei das flexible Folienmaterial des zweiten Halters (62; 148; 222) aus Ende an Ende verbundenen Rollen von diesem Folienmaterial ausgebildet ist.

6. System gemäß einem Anspruch 1 bis 5, wobei jeder Aufhänger (25; 150) an einer Seite einen feststehenden Arm (31, 34, 35) aufweist, der sich von dem trogförmigen Boden (30; 152) zu einer Stabverbindung (35; 56) über dem Zentrum des Aufhängers fortsetzt und an der anderen Seite eine Öffnung (48; 159) zur Einbringung des flexiblen Folienmaterials des zweiten Halters (62; 148; 222) aufweist.

7. System gemäß Anspruch 6, wobei entfernbare Bügelteile (50) operativ vorgesehen sind, um sich von der anderen Seite jedes Aufhängers (25; 150) zur zentralen Stabverbindung (35; 36) zu erstrecken, um die offene Seite (48; 159) zu verschließen und beide Seiten des Aufhängers symmetrisch an der zentralen Stabverbindung aufzuhängen.

8. System gemäß einem der Ansprüche 6 oder 7, wobei das Bügelteil (50) des zu öffnenden Auslegers (32) von jedem Aufhänger (25; 150) entfernbar an seinem oberen Ende an einer Stelle, die im Wesentlichen in vertikaler Ausrichtung mit dem zentralen, erhöhten Aufhängungshalter (36; 56) des Aufhängers (25; 150) liegt, befestigt ist.

9. System gemäß einem der Ansprüche 1 bis 8, wobei der trogförmige, flexible, folienförmige, zweite Halter (62; 148; 222) sich durch eine Vielzahl von ersten Haltern (150) erstreckt und von diesen gehalten wird und Folgendes aufweist: einen Übergangshalter (148), der einen zentralen Halter (150) hat und eine zentrale, biegsame Bodenstrebe (162), die sich auf jeder Seite des genannten zentralen Halters erstreckt, sich aufwärts erstreckende, im wesentlichen trogförmige Halter (165, 166, 168, 169) auf jeder Seite des genannten zentralen Halters, die an der genannten biegsamen Strebe befestigt sind, und Mittel, um ein Ende des flexiblen, folienförmigen, zweiten Halters (62) an dem genannten Übergangshalter zu befestigen, so dass die genannte Kabelwanne durch die Übergänge geführt wird, die durch die Biegung der genannten Strebe (162) vorgegeben werden.

10. System gemäß Anspruch 9, wobei der genannte Übergangshalter (148) ein stabförmiges Erzeugnis (162) und Klippmittel (101 bis 106; 188 bis 190; 195 bis 197; 215, 216) umfasst, die so operativ ausgestaltet sind, dass der genannte zweite Halter (62) am genannten Übergangshalter (148) durch Umgreifen des stabförmigen Erzeugnisses befestigt wird.

11. System gemäß einem der Ansprüche 9 oder 10, wobei die genannten trogförmigen Halter (152) an jedem Ende der genannten Strebe (162) gepaart sind, mit jedem der genannten Paare (168, 169) innerhalb der genannten Klippmittel (60).

12. System gemäß einem der Ansprüche 9 bis 11, wobei ein rechter und linker trogförmiger Halter (152) symmetrisch auf jeder Seite des genannten zentralen Halters (150) angeordnet sind, und Mittel (215, 216) zur Befestigung einer Kante (99; 100) eines zweiten Halters (62) an den genannten rechten und linken trogförmigen Haltern vorgesehen sind, um den Stamm eines T-Stücks auszubilden.

13. Verfahren zur Halterung und Strukturierung eines Bündels von Kabeln (140), das den Schritt der Halterung von wenigstens zwei ersten Haltern (25) umfasst, die an Gebäudekonstruktionen hängen, wobei jeder erster Halter eine aufwärts geöffnete, trogförmige Bodenhalterung (30) umfasst, welches durch die folgende Schritte gekennzeichnet ist, zwischen den genannten ersten Haltern Aneinanderreihen eines flexiblen zweiten Aufhängers (62), der gebogen ist, um sich an die aufwärts geöffneten, trogförmigen Halterungen anzulegen, um einen aufwärts geöffneten Kabelwannentrog zwischen den genannten ersten Haltern auszubilden, und dann Verlegen von Kabeln (140) in den genannten aufwärts geöffneten Trog, um ein Bündel von Kabeln (140) in strukturierter Art und Weise, das sich zwischen den genannten ersten Haltern (25) erstreckt, zu halten.

14. Verfahren gemäß Anspruch 13, wobei die flexiblen zweiten Aufhänger (62) an jedem trogförmigen Halter (30) befestigt werden.

15. Verfahren gemäß einem der Ansprüche 13 oder 14, wobei jeder der ersten Aufhänger (25) mit einer zentrierten Stabverbindung (36) über dem trogförmigen Halter (30) versehen ist, wobei die genannte Stabverbindung einstückig mit dem Halter an dessen einer Seite verbunden ist, wobei die andere Seite offen gelassen wird, um den zweiten Aufhänger (62) und ein oder mehrere Kabel (140) aufzunehmen.

16. Verfahren gemäß Anspruch 15, wobei die andere offene Seite (48) von jedem ersten Aufhänger (25) mit einem Bügel (50) verschlossen wird und beide Enden des trogförmigen Halters (30) belastet werden.

17. Verfahren gemäß einem der Ansprüche 13 bis 16, wobei die zweiten Aufhänger (62) aus Rollen von Kunststoffnetz ausgebildet werden, und wobei die Rollen Ende an Ende verbunden werden.

18. Verfahren gemäß einem der Ansprüche 13 bis 17, wobei ein drahtförmiger Übergang (162) mit den genannten zweiten Aufhängern (62) verwendet wird, um Kurven, Ellbogen, T-Stücke und andere Ausgestaltungen auszubilden.

19. Verfahren gemäß einem der Ansprüche 13 bis 18, wobei der Übergang mit einer biegsamen, horizontalen Bodenstrebe (162) versehen ist, um eine gewünschte Krümmung oder einen Höhenausgleich des Kabelhaltesystems zu erhalten.

20. Verfahren gemäß einem der Ansprüche 13 bis 19, wobei der Übergang mit einem zentralen Formteil versehen ist, um den Übergang ein einem Gewindestab (110; 200) aufzuhängen.

## Revendications

1. Système de support et de distribution de câble, comprenant une série de supports primaires (25; 150) présentant chacun un fond de support essentiellement en forme de gouttière (30, 152) et un support secondaire élastique (62; 148; 222) supporté à l'intérieur desdits supports primaires pour former une gouttière longitudinal pour supporter un faisceau de câbles (140) dans celle-ci, **caractérisé en ce que** chaque support primaire est un crochet (25; 150) adaptée pour être suspendu à des composants structurels d'un bâtiment au-dessus d'un plafond suspendu, dans lequel chaque crochet (25; 150) présente un support inférieur en forme de gouttière (30; 152) pour les faisceaux de câbles (140) et au moins une patte (31) s'étendant à partir du support inférieur jusqu'à un support de suspension élevé central (35, 36) de telle sorte que la charge du faisceau soit supportée d'une façon symétrique au-dessus du centre du support inférieur, et **en ce que** le support secondaire (62; 148; 222) comprend un matériau en feuille flexible adaptée pour se conformer au fond en forme de gouttière des crochets (25; 150) et s'étendant d'un crochet à un autre pour former un plateau de câble flexible.

2. Système selon la revendication 1, dans lequel le matériau en feuille flexible du support secondaire (62; 148; 222) est un treillis ouvert.

3. Système selon la revendication 1 ou 2, dans lequel le matériau en feuille flexible du support secondaire (62; 148; 222) est fixée à l'intérieur de chaque crochet (25; 150) au moins à chaque bord (99; 100) dudit matériau en feuille.

4. Système selon la revendication 3, dans lequel le matériau en feuille flexible du support secondaire (62; 148; 222) est fixée à l'aide d'un moyen d'attache (60; 76; 101 à 106; 188 à 190; 195 à 197; 215, 216) à l'intérieur de chaque crochet (25; 150) au moins en trois endroits également espacés.

5. Système selon l'une des revendications 1 à 4, dans lequel le matériau en feuille flexible du support secondaire (62; 148; 222) est formée à partir de rouleaux dudit matériau en feuille joints bout à bout.

6. Système selon l'une des revendications 1 à 5, dans lequel chaque crochet (25; 150) comporte sur un premier côte un bras fixe (31, 34, 35) s'étendant a partir du fond en forme de gouttière (30; 152) jusqu'à une connexion de tige (36; 56) située au dessus du centre du crochet, et sur l'autre côté une ouverture (48; 159) pour l'insertion du matériau en feuille flexible du support secondaire (62; 148; 222).

7. Système selon la revendication 6, dans lequel des moyens formant bride amovibles (50) sont prévus en fonctionnement pour s'étendre à partir de l'autre côté de chaque crochet (25; 150) jusqu'à la connexion de tige centrale (36; 56) afin de fermer le côté ouvert (48; 159) et de supporter les deux côtés du crochet d'une façon symétrique à partir de la connexion de tige centrale.

8. Système selon la revendication 6 ou 7, dans lequel les moyens formant bride (50) de la patte ouvrante (32) de chaque crochet (25; 150) sont fixés d'une façon amovible à son extrémité supérieure à une position en alignement vertical général avec le support de suspension central élevé (36; 56) du crochet (25; 150).

9. Système selon l'une des revendications 1 à 8, dans lequel le support secondaire en forme de gouttière en feuille flexible (62; 148; 222) s'étend à travers et est supporté par une pluralité de supports primaires (150), et comprend un support de transition (148) présentant un support central (150), et une entretoise inférieure centrale coudable (162) s'étendant sur chaque côté dudit support central, des supports essentiellement en forme de gouttière s'étendant vers le haut (165, 166, 168, 169) sur chaque côté dudit support central et fixés à ladite entretoise coudable, et des moyens pour fixer une extrémité dudit support secondaire en feuille flexible (62) audit support de transition de telle sorte que ledit plateau de câble soit orienté à travers les transitions dictées par la courbure de ladite entretoise (162).

10. Système selon la revendication 9, dans lequel ledit support de transition (148) comprend une structure en forme de tige (162), et des moyens d'attache (101 à 106; 188 à 190; 195 à 197; 215, 216) pouvant être utilisés pour fixer ledit support secondaire (62) audit support de transition (148) en encerclant la structure en forme de tige.

11. Système selon la revendication 9 ou 10, dans lequel lesdits supports en forme de gouttière (152) à chaque extrémité de ladite entretoise (162) sont appariés, chacune desdites paires (168, 169) étant située à l'intérieur desdits moyens d'attache (60).

12. Système selon l'une quelconque des revendications 9 à 11, dans lequel des supports droit et gauche en forme de gouttière (152) sont positionnés d'une façon symétrique sur chaque côté dudit support central (150), et des moyens (215, 216) pour fixer un bord (99; 100) d'un support secondaire (62) sur lesdits supports droit et gauche en forme de gouttière sont prévus pour former l'âme d'un T.

13. Procédé pour supporter et organiser un faisceau de câbles (140), comprenant l'étape de support d'au moins deux supports primaires (25) suspendus à des structures de bâtiment, chaque support primaire comprenant un support inférieur en forme de gouttière s'ouvrant vers le haut (30), **caractérisée par** les étapes consistant à suspendre entre lesdits supports primaires un support secondaire flexible (62) qui est fléchi de manière à se conformer aux supports en forme de gouttière s'ouvrant vers le haut afin de former une gouttière formant plateau de câble s'ouvrant vers le haut entre lesdits supports primaires, et ensuite à poser des câbles dans ladite gouttière s'ouvrant vers le haut de telle sorte qu'un faisceau de câbles (140) s'étendant entre lesdits supports primaires (25) soit supportée d'une façon organisée.

14. Procédé selon la revendication 13, dans laquelle des supports secondaires flexibles (62) sont fixés à chaque support en forme de gouttière (30).

15. Procédé selon la revendication 13 ou 14, dans laquelle les supports primaires (25) présentent chacun une connexion de tige centrée (36) au-dessus du support en forme de gouttière (30), ladite connexion de tige étant intégralement connectée au support sur un premier côté de celui-ci, en laissant l'autre côté ouvert pour recevoir le support secondaire (62) ainsi qu'un ou plusieurs câbles (140).

16. Procédé selon la revendication 15, dans laquelle l'autre côté ouvert (48) de chaque crochet primaire (25) est fermé avec une bride (50) serrant les deux extrémités du support en forme de gouttière (30).

17. Procédé selon l'une des revendications 13 à 16, dans laquelle les supports secondaires (62) sont formées à partir de rouleaux de treillis en plastique, et dans laquelle les rouleaux sont connectés bout à bout.

18. Procédé selon l'une quelconque des revendications 13 à 17, dans laquelle une transition en forme de fil (162) est utilisée avec lesdits supports secondaires (162) pour former des courbes, des coudes, des T et d'autres configurations.

19. Procédé selon l'une des revendications 13 à 18, dans laquelle la transition comporte une entretoise inférieure horizontale flexible (162) pour obtenir une courbure souhaitée ou une modification de l'élévation du système de support de câble.

20. Procédé selon l'une des revendications 13 à 19, dans laquelle la transition comprend une pièce centrale permettant de suspendre la transition à une tige filetée (110; 200).
